# EUROPÄISCHE PATENTSCHRIFT

(11) **EP 3 969 740 B1**
(45) Veröffentlichungstag und Bekanntmachung des Hinweises auf die Patenterteilung: **20.12.2023**
(21) Anmeldenummer: 20726786.5
(22) Anmeldetag: 15.05.2020
(51) Int. Cl.: F03D 1/06

(54) **WINDENERGIEANLAGE UND WINDENERGIEANLAGEN-ROTORBLATT**
WIND TURBINE AND WIND TURBINE ROTOR BLADE
ÉOLIENNE ET PALE DE ROTOR D'ÉOLIENNE

(30) Priorität: 16.05.2019 DE 102019112945
(43) Veröffentlichungstag der Anmeldung: 23.03.2022
(73) Patentinhaber: Wobben Properties GmbH, 26607 Aurich (DE)
(72) Erfinder: HOFFMANN, Alexander, 26721 Emden (DE)
(74) Vertreter: Eisenführ Speiser
(86) Internationale Anmeldenummer: PCT/EP2020/063638
(87) Internationale Veröffentlichungsnummer: WO 2020/229667

(56) Entgegenhaltungen:
- US-A1- 2009 148 285
- US-A1- 2009 236 857

## Beschreibung

Die vorliegende Erfindung betrifft eine Windenergieanlage mit einem Windenergieanlagen-Rotorblatt.

Windenergieanlagen weisen typischerweise drei Rotorblätter auf, deren Pitchwinkel verstellbar sind. Typischerweise ist am Übergang zwischen einer Rotornabe und dem Rotorblatt ein Pitchlager vorgesehen, mittels welchem der Pitch- bzw. der Verstellwinkel der Rotorblätter einstellbar ist. Bei älteren Windenergieanlagen ist es bekannt, dass lediglich die Blattspitze verstellbar ist, während der Rest des Rotorblattes fest mit einer Rotornabe verbunden ist.

Windenergieanlagen weisen typischerweise eine Nabe sowie an der Nabe befindliche drehbare Rotorblätter auf. Durch Verstellung des Pitchwinkels der Rotorblätter können die Rotorblätter in den Wind oder aus dem Wind gedreht werden. Durch Verstellung der Rotorblätter kann die Leistung und die Drehzahl des Rotors der Windenergieanlage beeinflusst werden. Je länger die Rotorblätter und damit je schwerer die Rotorblätter, desto größer die benötigten Verstellkräfte, um den Pitchwinkel der Rotorblätter zu verändern. Mit zunehmender Masse der Rotorblätter sinkt zum einen die maximale Regelgeschwindigkeit und zum anderen müssen die Motoren für die Pitchverstellung größer werden.

EP 2 802 769 B1 zeigt eine Windenergieanlage mit einer Nabe und wenigstens einem Blatt, das an der Nabe befestigt ist. Das Blatt weist einen ersten und zweiten Blattabschnitt auf, wobei der erste Blattabschnitt ortsfest an der Nabe befestigt ist. Der zweite Blattabschnitt ist über ein Drehlager mit dem ersten Blattabschnitt verbunden. Damit befindet sich das Drehlager nicht mehr unmittelbar zwischen der Nabe und der Rotorblattwurzel des Rotorblattes. Weiterer Stand der Technik ist in US 2009236857 A1 offenbart.

Mit zunehmender Länge der Rotorblätter wächst auch die Belastung auf ein Pitchlager zwischen der Rotornabe und dem Rotorblatt.

In der prioritätsbegründenden deutschen Patentanmeldung hat das Deutsche Patent- und Markenamt die folgenden Dokumente recherchiert: Dokument D1: DE 10 2008 037 605 A1, DE 10 2014 203 508 A1, DE 296 02 674 U1, US 7,939,961 B1, US 2014/0 322 013 A1 und EP 2 802 769 B1.

Es ist eine Aufgabe der vorliegenden Erfindung, die oben beschriebenen Nachteile zu reduzieren oder zu vermeiden. Es ist ferner eine Aufgabe der Erfindung, eine Windenergieanlage vorzusehen, welche eine reduzierte Belastung auf ein Pitchlager ermöglicht.

Diese Aufgabe wird durch eine Windenergieanlage nach Anspruch 1 gelöst.

Somit wird eine Windenergieanlage mit einer Rotornabe und mindestens einem Rotorblatt ortsfest an der Rotornabe vorgesehen. Das Rotorblatt ist dreiteilig ausgestaltet und weist einen Rotorblattwurzelbereich, einen mittleren Bereich und einen Rotorblattspitzenbereich auf. Der Rotorblattwurzelbereich ist ortsfest an der Nabe befestigt. Zwischen dem Rotorblattwurzelbereich und dem mittleren Abschnitt ist ein erstes Pitchlager und zwischen dem mittleren Bereich und dem Rotorblattspitzenbereich ist ein zweites Pitchlager vorgesehen. Damit wird ein Rotorblatt mit zwei Pitchlagern vorgesehen, welche entlang der Längsachse des Rotorblattes beabstandet zueinander angeordnet sind. Das erste Pitchlager befindet sich nunmehr nicht mehr direkt an der Rotornabe, sondern ist beabstandet zur Rotornabe vorgesehen.

Gemäß einem Aspekt der vorliegenden Erfindung beträgt die Länge des Rotorblattwurzelbereiches mindestens 10 %, insbesondere mindestens 20 %, der Gesamtlänge des Rotorblattes. Die Gesamtlänge des Rotorblattes setzt sich aus dem Rotorblattwurzelbereich, dem mittleren Abschnitt und dem Rotorblattspitzenbereich zusammen. Die Länge des Rotorblattes erstreckt sich somit vom Übergang der Rotornabe auf den Rotorblattwurzelbereich bis zur Rotorblattspitze.

Gemäß einem Aspekt der vorliegenden Erfindung wird der Rotorblattwurzelbereich direkt an der Rotornabe ortsfest befestigt und insbesondere verschraubt. Damit ist der Rotorblattwurzelbereich bzw. ein Innenblatt fest und nicht drehbar an der Nabe befestigt.

Gemäß einem Aspekt der vorliegenden Erfindung kann der Rotorblattwurzelbereich den breitesten Abschnitt des Rotorblattes darstellen. Eine Rotorblattsehne im Bereich des Rotorblattwurzelbereichs kann somit größer als die Sehnen der Rotorblätter in dem mittleren oder Rotorblattspitzenbereich sein. Optional können die mindestens drei Bereiche mehrteilig ausgestaltet sein. Hierbei kann die Teilung parallel oder senkrecht zur Längsachse erfolgen.

Gemäß einem Aspekt der vorliegenden Erfindung ist der Rotordurchmesser mindestens 70 m. Gemäß einem Aspekt der vorliegenden Erfindung ist das erste Pitchlager als ein kreisrundes Pitchlager und als Verbindungselement für eine beidseitige Direktverschraubung ausgestaltet.

Das zweite Pitchlager stellt z. B. eine zweifach gelagerte Rohrsteckverbindung dar.

Durch Variation der Länge des Rotorblattwurzelabschnitts, des mittleren Bereichs und des Rotorblattspitzenabschnitts kann die Länge des Rotorblattes variieren, so dass durch Variation der Länge der drei Rotorblattabschnitte 27 verschiedene Rotorblattlängen erreicht werden können, wenn jeder Rotorblattabschnitt drei unterschiedliche Längen aufweist. Damit kann eine breite Variation der Länge der Rotorblätter erreicht werden, ohne dass dabei der Produktionsaufwand erheblich erhöht wird. Es müssen hierbei beispielsweise lediglich neun unterschiedliche Rotorblattabschnitte hergestellt werden.

Gemäß einem weiteren Aspekt der vorliegenden Erfindung kann durch Drehen des ersten Pitchlagers der Pitchwinkel des mittleren Bereichs sowie des Rotorblattspitzenabschnittes zusammen verstellt werden. Durch Drehen des zweiten Pitchlagers wird lediglich der Rotorblattspitzenbereich variiert, während der Rotorblattwurzelbereich und der mittlere Abschnitt keine Veränderung des Pitchwinkels ermöglichen. Durch die zwei voneinander beabstandeten Pitchlager wird eine komplett neue Pitch- bzw. Teilpitchsteuerung der Rotorblätter ermöglicht.

Nicht beansprucht ist ein Windenergieanlagen-Rotorblatt mit mindestens drei Bereichen, nämlich einem Rotorblattwurzelbereich, einem mittleren Bereich und einem Rotorblattspitzenbereich. Das Rotorblatt ist somit mindestens dreiteilig ausgestaltet. Der Rotorblattwurzelbereich ist an einem Ende fest mit der Rotornabe verbindbar. Dazu kann eine Mehrzahl von Schrauben vorgesehen sein. Zwischen dem Rotorblattwurzelbereich und dem mittleren Bereich, d. h. am zweiten Ende des Rotorblattwurzelbereichs, ist ein erstes Pitchlager vorgesehen. Zwischen dem mittleren Bereich und dem Rotorblattspitzenbereich ist ein zweites Pitchlager vorgesehen. Das Windenergieanlagen-Rotorblatt weist somit mindestens ein erstes und ein zweites Pitchlager auf.

Gemäß einem Aspekt weist die Länge des Rotorblattwurzelbereiches mindestens 10 % und insbesondere mindestens 20 % der Gesamtlänge des Rotorblattes auf.

Mit der erfindungsgemäßen Windenergieanlage kann eine Vereinfachung der Produktion und der Rotorblatttransporte erreicht werden, da das Rotorblatt mindestens dreiteilig ausgestaltet ist. Ferner kann eine Vereinheitlichung der Komponenten der Rotorblätter erreicht werden, da wenige verschiedene Formen der drei Teile des Rotorblattes zu 27 verschiedenen Rotordurchmessern führen können. Das Rotorblatt ist dreiteilig ausgestaltet und jede Komponente kann drei unterschiedliche Längen aufweisen. Des Weiteren kann eine Gewichtsreduktion der Tragstruktur ermöglicht werden, da dickere Profile verwendet werden können, die bei kritischen Anströmverhältnissen gezielter verstellt werden können.

Mit der erfindungsgemäßen Windenergieanlage mit dem Windenergieanlagen-Rotorblatt mit mindestens zwei Pitchlagern kann die Regelbarkeit der Rotorblätter verbessert werden. Ferner kann eine Lastreduktion und eine Ertragssteigerung bei geringerer Schallemission erreicht. Die geringere Schallemission kann durch Verhinderung von Strömungsablösungen erreicht werden.

Aufgrund des Vorsehens von zwei Pitchlagern, welche entfernt zur Rotornabe vorgesehen sind, können die auf den Übergang zwischen Rotornabe und Rotorblatt wirkenden Lasten reduziert werden. Ferner können die Kosten für die Pitchlager reduziert werden, da sie für geringere Lasten ausgelegt sein können.

Mit der Erfindung ist es möglich, dass das Rotorblatt nicht nur genau für einen Betriebszustand (Windgeschwindigkeit, Luftdichte, Drehzahl, Verstellwinkel, lokaler Verdrillwinkel, Profilgeometrie etc.) optimal ausgelegt ist, sondern es können verschiedene Betriebszustände optimiert werden, bei welchen der Gesamtwirkungsgrad über dem Betriebsbereich verbessert werden kann.

Mit der Erfindung ist es möglich, lokalen Anstellwinkelveränderungen der aerodynamischen Profile, beispielsweise lokalen Strömungsabrissen, gezielt entgegenwirken zu können. Damit ist es möglich, dass Rotorblattbereiche mit wesentlich geringerer Anstellwinkelreserve (Reserve zum Strömungsabriss) vorgesehen werden können und das Rotorblatt an diesen Stellen mit dickeren und größeren Profilen ausgelegt werden kann. Dies ist ferner vorteilhaft hinsichtlich der Biegesteifigkeit, da diese quadratisch mit linear ansteigender Profildicke steigt. Dies kann zu einer erheblichen Gewichts- und damit Kostenreduktion führen. Bei einer Reduzierung der Profiltiefen kann dies zu einer Reduktion der Belastung auf die Windenergieanlage führen.

Mit dem mindestens dreiteiligen Rotorblatt wird ein Transport der jeweiligen Teile des Rotorblattes erheblich vereinfacht im Vergleich zu einem einteiligen Rotorblatt.

Weitere Ausgestaltungen der Erfindung sind Gegenstand der Unteransprüche.

Vorteile und Ausführungsbeispiele der Erfindung werden nachstehend unter Bezugnahme auf die Zeichnungen näher erläutert.
- Fig. 1: zeigt eine schematische Darstellung einer Windenergieanlage gemäß einem ersten Ausführungsbeispiel der Erfindung, und
- Fig. 2: zeigt eine schematische Darstellung eines Windenergieanlagen-Rotorblatts gemäß einem zweiten Ausführungsbeispiel.

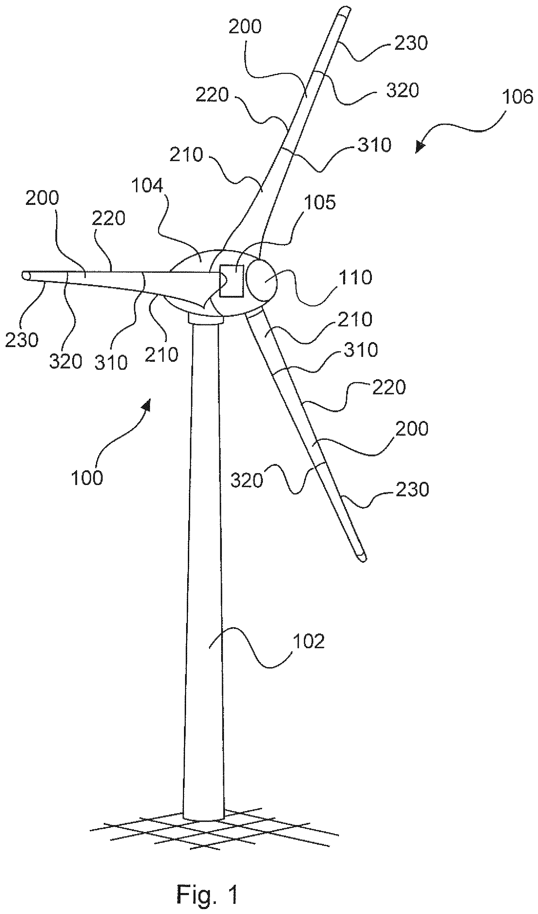

Fig. 1 zeigt eine schematische Darstellung einer Windenergieanlage gemäß einem ersten Ausführungsbeispiel. Die Windenergieanlage weist einen Turm 102 mit einer Gondel 104 und einen aerodynamischen Rotor 106 auf. Der aerodynamische Rotor 106 weist einen Spinner 110, eine Nabe 105 sowie drei Rotorblätter 200 auf. Die Rotorblätter 200 sind an der Nabe 105 im Bereich des Spinners 110 ortsfest bzw. drehfest befestigt. Mit anderen Worten, die Rotorblattwurzel der Rotorblätter 200 ist ortsfest bzw. nicht drehbar an der Nabe 105 der Windenergieanlage 100 befestigt. Innerhalb des Spinners 110 bzw. der Gondel 104 ist ein elektrischer Generator vorgesehen, welcher direkt oder indirekt mit dem aerodynamischen Rotor 106 verbunden ist, um bei Bewegung des aerodynamischen Rotors 106 elektrische Energie zu erzeugen.

Die Rotorblätter 200 sind mindestens dreiteilig ausgestaltet und weisen mindestens einen Rotorblattwurzelbereich 210, einen mittleren Bereich 220 sowie einen Rotorblattspitzenbereich 230 auf. Ein erstes Ende des Rotorblattwurzelbereichs 210 ist (direkt oder indirekt z. B. über einen Nabenadapter) an der Nabe 105 befestigt. Ein zweites Ende des Rotorblattwurzelbereichs 210 ist über ein erstes Pitchlager 310 mit einem ersten Ende des mittleren Bereichs 220 gekoppelt. Ein zweites Ende des mittleren Bereichs 220 ist über ein zweites Pitchlager 320 mit dem Rotorblattspitzenbereich 230 gekoppelt. Damit kann der Pitchwinkel des mittleren Bereichs 220 sowie der Pitchwinkel des Rotorblattspitzenbereichs 230 (zur Ausrichtung des Rotorblattwurzelbereichs 210) verändert werden. Vorzugsweise kann das erste Pitchlager 310 unabhängig vom zweiten Pitchlager 320 und umgekehrt betrieben werden. Die Drehrichtung des ersten Pitchlagers kann der Drehrichtung des zweiten Pitchlagers entsprechen. Alternativ dazu können sich die beiden Drehrichtungen voneinander unterscheiden. Entsprechendes gilt für die Drehgeschwindigkeit.

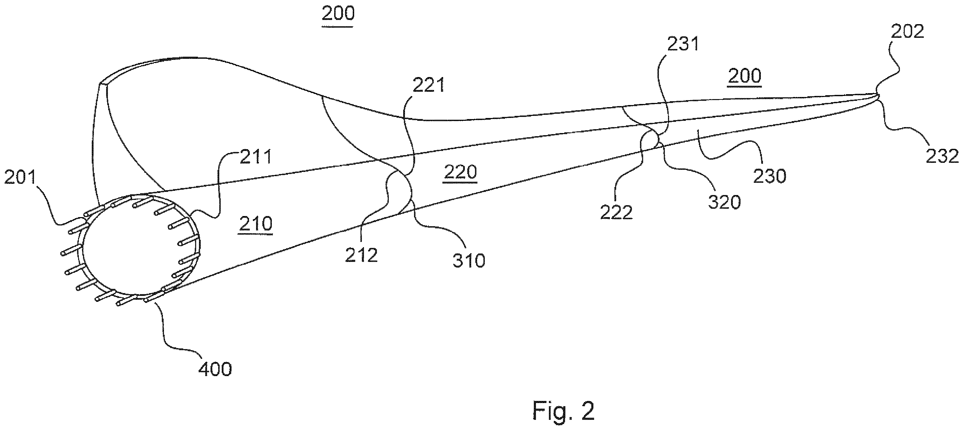

Fig. 2 zeigt eine schematische Darstellung eines Windenergieanlagen-Rotorblatts gemäß einem zweiten Ausführungsbeispiel.

Das Rotorblatt 200 weist mindestens einen Rotorblattwurzelbereich 210, einen mittleren Bereich 220 sowie einen Rotorblattspitzenbereich 230 auf, welche zusammen das Rotorblatt 200 ergeben. Das Rotorblatt 200 ist somit mindestens dreiteilig ausgestaltet. Alternativ dazu kann das Rotorblatt 200 auch mehr als dreiteilig ausgestaltet sein. Hierbei können die oben beschriebenen drei Bereiche z. B. jeweils mehrteilig ausgestaltet sein.

Der Rotorblattwurzelbereich 210 weist ein erstes und zweites Ende 211 , 212 auf. Der mittlere Bereich 220 weist ein erstes und zweites Ende 221, 222 auf. Der Rotorblattspitzenbereich 230 weist ein erstes und zweites Ende 231, 232 auf. Das Rotorblatt 100 weist ferner eine Rotorblattwurzel 201 und eine Rotorblattspitze 202 auf. Das erste Ende 211 des Rotorblattwurzelbereichs 210 entspricht im Wesentlichen der Rotorblattwurzel 201. Mittels des ersten Endes 211 des Rotorblattwurzelbereichs 210 kann das Rotorblatt 200 an einer Nabe 105 der Windenergieanlage 100 direkt oder indirekt befestigt werden. Die Befestigung erfolgt ortsfest oder drehfest, d. h., der Rotorblattwurzelbereich 210 ist nicht drehbar gegenüber der Nabe ausgestaltet.

Im Gegensatz zu den Rotorblättern gemäß dem Stand der Technik ist somit am Übergang zwischen der Rotorblattnabe und der Rotorblattwurzel kein Pitchlager und kein Pitchmotor vorgesehen.

Vielmehr ist gemäß der Erfindung ein erstes Pitchlager 310 zwischen dem zweiten Ende 212 des Rotorblattwurzelbereichs 210 und dem ersten Ende 221 des mittleren Bereichs 220 vorgesehen. Im Bereich des Pitchlagers 310 ist ebenfalls mindestens ein Pitchmotor vorgesehen, sodass der mittlere Bereich 220 gegenüber dem zweiten Ende 212 des Rotorblattwurzelbereichs 210 drehbar ausgestaltet ist. Im Bereich des Übergangs zwischen dem zweiten Ende 222 des mittleren Bereichs 220 und dem ersten Ende 231 des Rotorblattspitzenbereichs 230 ist ein zweites Pitchlager 320 vorgesehen, sodass der Rotorblattspitzenbereich 230 gegenüber dem mittleren Bereich 220 gedreht werden kann.

Der Pitchwinkel des mittleren Bereichs 220 ist somit einstellbar. Ferner ist der Pitchwinkel des Rotorblattspitzenbereichs 230 ebenfalls einstellbar.

Die Drehrichtung des ersten Pitchlagers kann der Drehrichtung des zweiten Pitchlagers entsprechen. Alternativ dazu können sich die beiden Drehrichtungen voneinander unterscheiden. Entsprechendes gilt für die Drehgeschwindigkeit.

Optional können die ersten und zweiten Pitchlager 310, 320 unabhängig voneinander betrieben werden. Damit kann beispielsweise der Pitchwinkel des mittleren Bereichs 220 verändert werden, ohne den Pitchwinkel des Rotorblattspitzenbereichs 230 zu verändern. Entsprechend kann auch nur der Pitchwinkel des Rotorblattspitzenbereichs 230 verändert werden, ohne den Pitchwinkel des mittleren Bereichs 220 zu verändern.

Gemäß einem Aspekt der vorliegenden Erfindung ist die Breite des Rotorblattwurzelbereichs 220 größer als die Breite des mittleren Abschnitts 220 oder des Rotorblattspitzenbereichs 230.

Gemäß einem Aspekt der vorliegenden Erfindung ist der Rotordurchmesser mindestens 70 m.

Gemäß einem Aspekt der vorliegenden Erfindung können niedrigere Lasten und somit niedrigere Kosten hinsichtlich der Pitchlager durch Verlagerung der Pitchebene an die Verbindungsstelle zwischen den jeweiligen Teilen des Rotorblattes erreicht werden. Dadurch, dass die Rotorblattwurzel drehfest an der Nabe befestigt ist, kann die Nabe damit kleiner ausgestaltet sein.

Gemäß einem Aspekt der vorliegenden Erfindung kann das Pitchlager als Verbindungsstück zwischen den jeweiligen Teilen des Rotorblattes vorgesehen sein. Dies kann optional mittels einer Direktverschraubung oder Querbolzverbindung erfolgen. Dies kann zu einer einfacheren Flanschkonstruktion führen. Ferner muss damit keine Langlochöffnung für einen Werkzeugeinsatz etc. vorgesehen sein.

In der zweiten Pitchebene (d. h. zwischen dem mittleren Bereich 220 und dem Rotorblattspitzenbereich 230) kann der Pitch- und Verbindungsmechanismus über zwei einfach gelagerte Rohrsteckverbindungen mit einem Verstellantrieb erfolgen. Dies ist vorteilhaft, weil dies technisch einfacher handhabbar ist als die Rotorblätter gemäß dem Stand der Technik.

Zwischen den Teilen des Rotorblattes kann es aufgrund des Verbindungspitchlagers zu einem Höhenversatz kommen. Dieser Höhenversatz kann optional durch einen Grenzschutzzaun aerodynamisch entkoppelt werden.

Gemäß einem Aspekt der vorliegenden Erfindung kann eine Blattöffnung vorgesehen sein, um den äußeren Schraubenkranz vom Inneren des Blattes nachziehen zu können. Diese Blattöffnung kann auch als Hebeöffnung verwendet werden.

## Patentansprüche

1. Windenergieanlage (100) mit
einer einzigen Rotorblattnabe (105) sowie
drei Windenergieanlagen-Rotorblättern (200),
wobei jedes der drei Windenergieanlagen-Rotorblätter (200) mindestens dreiteilig ausgestaltet ist und mindestens einen Rotorblattwurzelbereich (210), einen mittleren Bereich (220) sowie einen Rotorblattspitzenbereich (230) aufweist,
wobei jeweils ein Ende (211) des Rotorblattwurzelbereichs (210) drehfest an der Rotorblattnabe (105) befestigt ist,
wobei jeweils ein erstes Pitchlager (310) zwischen einem zweiten Ende (212) des Rotorblattwurzelbereichs (210) und einem ersten Ende (221) des mittleren Bereichs (220) eines der drei Windenergieanlagen-Rotorblätter (200) vorgesehen ist,
**dadurch gekennzeichnet, dass**
jeweils ein zweites Pitchlager (320) zwischen einem zweiten Ende (222) des mittleren Bereichs (220) und einem ersten Ende (231) des Rotorblattspitzenbereichs (230) eines der drei Windenergieanlagen-Rotorblätter (200) vorgesehen ist.

2. Windenergieanlage (100) nach Anspruch 1, wobei
eine Länge der Rotorblattwurzelbereiche (210) mindestens 10 % einer Gesamtlänge des Rotorblatts (200) beträgt.

3. Windenergieanlage (100) nach Anspruch 1 oder 2, wobei eine Rotorblattsehne im Bereich des Rotorblattwurzelbereichs (210) größer ist als eine Rotorblattsehne in dem mittleren Bereich (220) und in dem Rotorblattspitzenbereich (230).

4. Windenergieanlage (100) nach Anspruch 1 oder 2, wobei die Rotorblattwurzelbereiche (210), die mittleren Bereiche (220) und die Rotorblattspitzenbereiche (230) separat transportierbar sind.

5. Windenergieanlage nach einem der Ansprüche 1 bis 4, wobei
die ersten und zweiten Pitchlager (310, 320) unabhängig voneinander betreibbar sind.

6. Windenergieanlage (100) nach einem der Ansprüche 1 bis 5,
wobei eine Drehrichtung und eine Drehgeschwindigkeit der ersten und/oder zweiten Pitchlager (310, 320) sich jeweils voneinander unterscheiden können.

## Claims

1. A wind turbine (100) comprising
a single rotor blade hub (105) and
three wind turbine rotor blades (200),
wherein each of the three wind turbine rotor blades (200) is at least of a three-part configuration and has at least a rotor blade root region (210), a central region (220) and a rotor blade tip region (230),
wherein a respective end (211) of the rotor blade root region (210) is fixed non-rotatably to the rotor blade hub (105),
wherein there is respectively provided a first pitch bearing (310) between a second end (212) of the rotor blade root region (210) and a first end (221) of the central region (220) of one of the three wind turbine rotor blades (200),
**characterized in that** there is respectively provided a second pitch bearing (320) between a second end (222) of the central region (220) and a first end (231) of the rotor blade tip region (230) of one of the three wind turbine rotor blades (200).

2. A wind turbine (100) according to claim 1 wherein
a length of the rotor blade root regions (210) is at least 10% of an overall length of the rotor blade (200).

3. A wind turbine (100) according to claim 1 or claim 2 wherein a rotor blade chord in the region of the rotor blade root region (210) is greater than a rotor blade chord in the central region (220) and in the rotor blade tip region (230).

4. A wind turbine (100) according to claim 1 or claim 2 wherein the rotor blade root regions (210), the central regions (220) and the rotor blade tip regions (230) are transportable separately.

5. A wind turbine according to one of claims 1 to 4 wherein
the first and second pitch bearings (310, 320) are operable independently of each other.

6. A wind turbine (100) according to one of claims 1 to 5
wherein a direction of rotation and a speed of rotation of the first and/or second pitch bearings (310, 320) can be respectively different from each other.

## Revendications

1. Eolienne (100) avec
un seul moyeu de pale de rotor (105) ainsi que
trois pales de rotor d'éolienne (200),
dans laquelle chacune des trois pales de rotor d'éolienne (200) est configurée au moins en trois parties et présente au moins une zone de pied de pale de rotor (210), une zone médiane (220) ainsi qu'une zone de pointe de pale de rotor (230),
dans laquelle respectivement une extrémité (211) de la zone de pied de pale de rotor (210) est fixée sans pouvoir tourner au moyeu de pale de rotor (105),
dans laquelle respectivement un premier palier de calage (310) est prévu entre une seconde extrémité (212) de la zone de pied de pale de rotor (210) et une première extrémité (221) de la zone médiane (220) d'une des trois pales de rotor d'éolienne (200),
**caractérisée en ce que**
respectivement un second palier de calage (320) est prévu entre une seconde extrémité (222) de la zone médiane (220) et une première extrémité (231) de la zone de pointe de pale de rotor (230) d'une des trois pales de rotor d'éolienne (200).

2. Eolienne (100) selon la revendication 1, dans laquelle
une longueur des zones de pied de pale de rotor (210) s'élève au moins à 10 % d'une longueur totale de la pale de rotor (200).

3. Eolienne (100) selon la revendication 1 ou 2, dans laquelle une corde de pale de rotor dans la zone de la zone de pied de pale de rotor (210) est supérieure à une corde de pale de rotor dans la zone médiane (220) et dans la zone de pointe de pale de rotor (230).

4. Eolienne (100) selon la revendication 1 ou 2, dans laquelle les zones de pied de pale de rotor (210), les zones médianes (220) et les zones de pointe de pale de rotor (230) peuvent être transportées séparément.

5. Eolienne (100) selon l'une des revendications 1 à 4, dans laquelle
les premier et second paliers de calage (310, 320) peuvent être actionnés indépendamment l'un de l'autre.

6. Eolienne (100) selon l'une des revendications 1 à 5,
dans laquelle un sens de rotation et une vitesse de rotation des premier et/ou second paliers de calage (310, 320) peuvent se distinguer respectivement l'un de l'autre.
